# FASCICULE DE BREVET EUROPEEN

(11) **EP 2 688 958 B1**
(45) Date de publication et mention de la délivrance du brevet: **08.04.2020**
(21) Numéro de dépôt: 12714818.7
(22) Date de dépôt: 20.03.2012
(51) Int. Cl.: C08L 95/00, C08K 3/06, C08K 5/378, C08K 5/40, C08K 5/47

(54) **COMPOSITION DE VULCANISATION SOUS FORME DE GRANULES, SON PROCEDE DE PREPARATION ET SON UTILISATION**
VULKANISATIONSZUSAMMENSETZUNG IN GRANULATFORM, VERFAHREN ZU IHRER HERSTELLUNG UND VERWENDUNG
VULCANIZATION COMPOSITION IN THE FORM OF GRANULES, PROCESS FOR PREPARING SAME AND USE THEREOF

(30) Priorité: 22.03.2011 FR 1152359
(43) Date de publication de la demande: 29.01.2014
(73) Titulaire: Eiffage Travaux Publics, 93330 Neuilly Sur Marne (FR)
(72) Inventeur: KRAFFT, Serge, F-69540 Irigny (FR); SIMARD, Delphine, F-69008 Lyon (FR)
(74) Mandataire: Plasseraud IP
(86) Numéro de dépôt international: PCT/FR2012/050584
(87) Numéro de publication internationale: WO 2012/131228

(56) Documents cités:
- EP-A1- 0 299 820
- WO-A1-01/90250
- WO-A1-03/014231
- WO-A1-2010/100603
- WO-A2-2004/018554
- SHELL: "Introduction to Shell Thiopave", INTERNET CITATION , mai 2010 (2010-05), pages 1-9, XP002594001, Extrait de l'Internet: URL:http://www-static.shell.com/static/sul phur/downloads/introduction_she ll_thiopave.pdf [extrait le 2010-07-27]
- DAVID TIMM ET AL: "NCAT Report 09-05: Evaluation of Mixture Performance and Structural Capacity of Pavements using Shell Thiopave", NCAT REPORT 09-05 , août 2009 (2009-08), pages 1-96, XP002594002, Extrait de l'Internet: URL:http://www.ncat.us/reports/rep09-05.pd f [extrait le 2010-07-27]

## Description

La présente invention concerne des granulés solides comprenant une matrice bitumineuse et une forte teneur en composition de vulcanisation. L'invention concerne également un procédé de fabrication de ces granulés par co-extrusion de bitume et d'une composition de vulcanisation ainsi que l'utilisation de ces granulés dans un procédé de fabrication de bitumes modifiés.

Les bitumes sont des substances composées d'un mélange d'hydrocarbures, très visqueux voire solide à température ambiante. Ils sont utilisés dans la fabrication de matériaux pour des applications routières ou industrielles. Afin d'améliorer leurs propriétés mécaniques, des polymères (notamment des élastomères) sont ajoutés dans ces bitumes. Ces bitumes adjuvantés, encore appelés bitumes modifiés sont encore améliorés, stabilisés et ainsi rendus stockables par vulcanisation (ou réticulation) des polymères.

La vulcanisation des polymères est obtenue par l'ajout d'un agent de vulcanisation. Cet agent de vulcanisation, généralement à base de soufre ou de composés soufrés, se présente communément sous forme de compositions pulvérulentes. La pulvérulence de ces compositions pose certains problèmes sanitaires, de manipulation et de stockage. En effet, la pulvérulence de ces compositions à base de soufre ou de composés soufrés génère des odeurs et des poussières indésirables et irritantes voire toxiques. De plus, ces compositions pulvérulentes sont sensibles à l'humidité et ont tendance à s'agglomérer lors du stockage, ce qui peut provoquer des difficultés de manipulation et notamment des désordres au niveau des systèmes d'alimentation des machines.

Face à ces difficultés, certaines compositions de vulcanisation sous forme liquide ont été proposées. Cependant, ces compositions ne permettent pas d'obtenir des bitumes modifiés ayant les spécifications requises du fait de la nature des agents de vulcanisation mis en oeuvre.

WO2010/100603 propose quant à lui une composition de vulcanisation sous forme de granulés pour préparer des mélanges bitume/élastomères réticulés en limitant les émissions d'hydrogène sulfuré. Ces granulés sont obtenus par co-extrusion d'une matrice polymérique avec une composition de vulcanisation. Cependant, ces granulés présentent l'inconvénient de contenir une quantité non négligeable de polymère au détriment des composés actifs de vulcanisation.

Il persiste par conséquent un besoin pour les industriels d'une composition de vulcanisation non pulvérulente, procurant à la fois une sécurité sanitaire lors de la manipulation, une facilité de manipulation et de stockage, présentant une forte teneur en composition de vulcanisation et se mélangeant facilement avec le bitume.

La Demanderesse a mis au point, après de longues recherches, une composition de vulcanisation sous forme de granulés à matrice bitumineuse comprenant une forte teneur en composition de vulcanisation. Ces granulés peuvent être obtenus par co-extrusion à basse température d'un bitume et d'une composition de vulcanisation. La présente invention concerne donc des granulés comprenant :
- moins de 30%, de préférence entre 0,5 et 20%, plus préférentiellement entre 2 et 5% en poids de bitume ; et
- plus de 70%, de préférence entre 80% et 99,5%, plus préférentiellement entre 95 et 98% en poids d'une composition de vulcanisation comprenant un agent de vulcanisation.

De façon avantageuse, la composition de vulcanisation mise en oeuvre dans le granulé est sous forme pulvérulente.

Selon un mode de réalisation particulier, l'agent de vulcanisation contenu dans la composition de vulcanisation peut être du soufre ou un composé organique soufré. En particulier, l'agent de vulcanisation peut être choisi parmi le soufre sublimé ou un donneur de soufre associé à un sulfénamide, ledit donneur de soufre étant choisi parmi les thiurames et les dithiomorpholines.

Dans un mode de réalisation particulier, la composition de vulcanisation comprend en outre un activateur de vulcanisation, un co-activateur de vulcanisation, un accélérateur de vulcanisation, un agent antioxydant ou les mélanges de ceux-ci. Avantageusement, la composition de vulcanisation comprend en poids:
- 1 à 5 parts d'agent de vulcanisation ;
- 3 à 5 parts d'activateur de vulcanisation ;
- 1 à 3 parts de co-activateur de vulcanisation ;
- 1 à 6 parts d'accélérateur de vulcanisation ;
- 1 à 4 parts d'agent antioxydant.

L'accélérateur de vulcanisation est constitué d'un mélange de thiazole et de thiurame. ce mélange est de préférence un mélange 50/50. Dans ce mélange le thiazole est par exemple le mercaptobenzothiazole et le thiurame est par exemple le disulfure de tétraméthylethiurame.

L'activateur de vulcanisation est un oxyde métallique, tel que l'oxyde zinc.

Le co-activateur est un acide gras, tel que l'acide stéarique.

L'agent antioxydant est un condensat d'acétodiphénylamine ou un dérivé de quinone, tel que la trétraméthylbenzoquinone.

La composition de vulcanisation décrite dans la demande de brevet EP0 299 820 est particulièrement adaptée à la présente invention. Comme exemple de composition de pulvérisation on peut citer le produit commercialisé par la Société Demanderesse sous la marque RETIFLEX®.

Le bitume doit être choisi de façon à être suffisamment mou pour permettre la réalisation du mélange par co-extrusion à basse température mais rester suffisamment dur à température ambiante afin de permettre l'obtention de granulés solides non collants et d'éviter l'agglomération des granulés lors du stockage. En particulier, le bitume est choisi parmi les bitumes ayant une pénétrabilité à 25°C, mesurée selon la norme NF EN 1423, comprise entre 50 et 220, de préférence entre 70 et 100 (les valeurs de pénétrabilité sont exprimées en dixième de millimètre), et une température bille anneau, mesurée selon la norme NF EN 1427, comprise entre 35 et 60°C, de préférence entre 43 et 51°C. De manière avantageuse, le bitume sera choisi parmi les bitumes communément appelés de grade 50/70, 70/100 et 160/220 selon la norme NF EN 1423.

Les granulés de l'invention ont l'avantage d'être solides, non friables et de ne pas agglomérer. Ils offrent donc une facilité de manipulation et une sécurité sanitaire comparés à une composition de vulcanisation pulvérulente. De plus, les granulés de l'invention présentent une matrice bitumineuse ce qui les rend plus facilement incorporables dans un bitume par rapport à une composition pulvérulente ou à des granulés à matrice polymérique. Enfin, les granulés de l'invention présentent une forte teneur en composition de vulcanisation.

Dans un mode de réalisation particulier, les granulés de l'invention ne comprennent pas de cendres volantes, de silice, de matériaux à base de silice ou de mélanges de ceux-ci. De manière préférée, les granulés de l'invention ne comprennent pas de charges minérales.

Selon un autre mode de réalisation particulier, les granulés de l'invention ne comprennent pas de composés polymères, de matière cireuse ou de mélanges de ceux-ci.

Par le terme « composés polymères » au sens de la présente invention, on entend les polymères thermoplastiques tels que les polyéthylènes, les copolymères éthylène/propylène, les copolymères éthylène/ester acrylique, les copolymères éthylène/glycol monostéarate, les copolymères éthylène/acétate de vinyle et les mélanges de ceux-ci.

Par le terme « matière cireuse » au sens de la présente invention on entend notamment les cires paraffiniques, les cires d'origine végétale ou animale, les cires d'origines pétrolières ou les cires à base de dérivés d'acides gras.

De façon tout à fait remarquable, et contre toute attente, les inventeurs ont trouvé que même en l'absence de tout composé polymère et de toute matière cireuse, les granulés selon l'invention présentaient une excellente tenue mécanique et pouvaient être stockés sans problème d'agglomération des granulés entre eux ni de désagrégation des granulés.

Ainsi, les granulés selon l'invention sont tels qu'ils présentent une stabilité au stockage d'au moins 3 mois à la température ambiante, de préférence d'au moins 6 mois. La stabilité au stockage est évaluée par le test suivant : 50g de granulés sont disposés dans une boîte cylindrique de 10cm de diamètre avec une charge de 1,6kg et stockés pendant 15 jours dans une étuve à 50°C afin de simuler un stockage en hangar et l'entassement des sacs. Les granulés sont considérés comme stables s'ils ne se sont pas désagrégés lors de ce test, et peuvent encore s'écouler librement, c'est-à-dire s'ils n'ont pas pris en masse ou formés d'agglomérats entre eux.

Les granulés tels que définis ci-dessus peuvent être obtenus par co-extrusion. La présente invention a donc également pour objet un procédé de fabrication de granulés tels que définis ci-dessus comprenant le mélange par co-extrusion de moins de 30%, de préférence de 0,5 à 20%, plus préférentiellement entre 2 et 5% en poids de bitume avec plus de 70%, de préférence entre 80% et 99,5%, plus préférentiellement entre 95 et 98% en poids d'une composition de vulcanisation comprenant un agent de vulcanisation.

De manière avantageuse, la composition de vulcanisation et le bitume sont choisis comme définis plus haut. En particulier, la composition de vulcanisation est sous forme de poudre pulvérulente.

Le procédé de co-extrusion peut être effectué sur une extrudeuse à simple vis, à double-vis co-rotatives ou à double vis contra-rotatives, préférentiellement sur une extrudeuse à double vis co-rotative. Le profil de vis doit être choisi de telle sorte qu'il permette un mélange homogène tout en évitant un échauffement excessif du mélange. Par exemple, le profil de vis peut comprendre quatre zones : une zone A et une zone B comprenant des éléments de convoyage, une zone C comprenant au moins un élément de malaxage, et une zone D comprenant des éléments de convoyage.

Le profil de température le long du profil de vis est régulé par des systèmes de contrôle de température. Il doit être choisi de telle sorte qu'il permette un mélange homogène du bitume et de la composition de vulcanisation. En particulier, la température doit être suffisamment élevée afin de maintenir le bitume sous forme liquide tout en restant suffisamment basse pour empêcher la dégradation des composés actifs de la composition de vulcanisation. Avantageusement, le profil de température en régime permanent ne dépasse pas 100°C.

Dans un mode de réalisation particulier, la composition de vulcanisation est introduite dans la zone A, qui permet sa mise en température, et transportée jusqu'à la zone B. Le bitume, préalablement chauffé, est introduit au niveau de la zone B qui permet un premier mélange avec la composition de vulcanisation. Le mélange est malaxé et homogénéisé dans la zone C puis transporté le long de la zone D vers une tête de sortie. Le profil de température est par exemple de 70 à 80°C, préférentiellement 80°C dans la zone A, de 80 à 100°C, de préférence 90°C dans la zone B, de 70 à 80°C, de préférence 80°C dans la zone C, de 80 à 100°C, de préférence 90°C dans la zone D. La température de la tête de sortie peut être adaptée de façon à faciliter le passage du mélange dans une filière et la découpe de l'extrudé ainsi obtenu. La température de la tête de sortie peut être comprise entre 80 et 140°C, de préférence 100°C. Le mélange passe ensuite dans une filière afin d'obtenir un extrudé. Les granulés selon l'invention peuvent être obtenu soit par découpe soit par concassage de cet extrudé. La découpe peut être effectuée sous eau ou sous air à l'aide d'une lame, d'une tête de découpe rotative munie de couteaux, ou de tout autre dispositif permettant de granuler ou de découper le mélange. Par exemple, la découpe peut être effectuée sous eau chaude entre 30 et 90°C, de préférence entre 50 et 85°C, en fonction du grade du bitume utilisé dans la composition de vulcanisation. Alternativement, la découpe peut être effectuée sous air à une température entre 20°C et 100°C, ces conditions de découpe dépendant du grade de bitume utilisé. Les granulés peuvent être ensuite refroidis, par exemple par courant d'air ou par eau avant d'être éventuellement séchés.

Eventuellement, un agent antiagglomérant, tel que le talc, le stéarate de zinc ou le stéarate de calcium peut être appliqué à la surface des granulés, par exemple par pulvérisation.

La présente invention concerne aussi l'utilisation des granulés de l'invention dans un procédé de fabrication d'un bitume modifié. En particulier, les granulés de l'invention peuvent être utilisés dans un procédé de fabrication d'un bitume modifié comprenant le mélange d'un bitume, d'un polymère et des granulés tels que définis ci-dessus. Dans un tel procédé, les granulés selon l'invention se substituent à la composition de vulcanisation liquide ou pulvérulente classique.

Dans un mode de réalisation particulier, le procédé de fabrication de bitume modifié selon l'invention comprend :
- le chauffage d'un bitume entre 160 et 200°C;
- l'ajout d'un polymère sous agitation;
- l'ajout des granulés selon l'invention, éventuellement simultanément au polymère;
- la maturation du mélange obtenu sous agitation entre 160 et 200°C pendant 1 à 300min ;
- la récupération d'un bitume modifié.

Tout type de bitume routier classiquement utilisé peut être mis en œuvre pour la réalisation de bitumes modifiés selon l'invention. A titre d'exemple, le bitume sera choisi parmi les bitumes communément appelés de grade 20/30, 35/50, 50/70, 70/100 et 160/220 selon la norme NF EN 1423. Les polymères adaptés pour ce mélange sont les élastomères classiquement utilisables dans le domaine des bitumes modifiés comme par exemple les polybutadiènes, les polyisoprènes, les caoutchoucs butyles, les terpolymères éthylène/propène/diène, les copolymères styrène/isoprène, les copolymères styrène/butadiène (tels que le polymère bloc styrène/ butadiène (SB) ou le copolymère bloc styrène/butadiène/styrène (SBS)) seuls ou en mélange. Le mélange peut comprendre entre 75 et 98%, de préférence entre 90 et 98% de bitume, entre 1 et 15%, de préférence entre 1 et 8% de polymère et entre 0,05 et 5%, de préférence entre 0,1 et 2% de granulés selon l'invention, les pourcentages étant exprimés en poids par rapport à la composition totale.

Les exemples suivants illustrent le procédé de fabrication des granulés selon l'invention ainsi que leur utilisation, et leur intérêt. Ces exemples ne sont présentés que dans un but d'illustration et ne peuvent être considérés comme limitatifs.

### Exemples :

### Exemple 1 : Fabrication des granulés selon l'invention

Différents types de granulés selon l'invention ont été préparés en utilisant des quantités variables de bitume et de composition de vulcanisation pulvérulente.

Le bitume utilisé est un Bitume de grade 70/100 présentant une pénétrabilité à 25°C de 89 et une température bille anneau de 44,6°C.

La composition pulvérulente de vulcanisation est constituée de :
- 21,44% en poids de soufre,
- 21,43% en poids d'acide stéarique,
- 35,71% en poids d'oxyde de zinc,
- 7,14% en poids de mercaptobenzothiazole,
- 7,14% en poids de disulfure de tétraméthylthiurame, et
- 7,14% en poids de tétraméthylbenzoquinone.

Les granulés ont été obtenus par coextrusion sur une extrudeuse à double vis contrarotative constituée de quatre zones :
- Zone A : zone d'avancée maintenue à 80°C ;
- Zone B : zone d'avancée maintenue à 90°C ;
- Zone C : zone de malaxage maintenue à 80°C ; et
- Zone D : zone d'avancée maintenue à 90°C ;
et équipée d'une tête de sortie chauffée à 100°C, d'une filière et d'une tête de découpe rotative munie de couteaux permettant la coupe des granulés.

La composition de vulcanisation a été introduite en début de zone A et le bitume a été introduit en début de zone B.

Le tableau 1 reprend la composition des granulés réalisés.

**Tableau 1**

| Essai | % en poids de bitume | % en poids de composition de vulcanisation |
|---|---|---|
| 1 | 28,3 | 71,7 |
| 2 | 17,2 | 82,8 |
| 3 | 8,2 | 91,8 |
| 4 | 5,5 | 94,5 |
| 5 | 4,2 | 95,8 |

Chacun de ces essais a permis d'obtenir des granulés solides.

### Exemple 2 : Stabilité au stockage des granulés selon l'invention

Pour évaluer la stabilité des granulés au stockage, des échantillons de 50 g des granulés de chacun des essais 1 à 5 ont été stockés dans un récipient cylindrique de 10 cm de diamètre, avec une charge de 1,6kg, pendant 15 jours dans une étuve à 50°C afin de simuler un stockage en hangar et l'entassement des sacs.

Il n'a été observé aucune formation de poudre ou de colmatage entre les granulés montrant ainsi que les granulés de l'invention sont non friables, non agglomérants et stables.

### Exemple 3 : Evaluation d'un bitume modifié 70/100 selon l'invention

Un bitume modifié A1 a été réalisé à partir de :
- 95,4% en poids d'un bitume de grade 70/100 présentant une pénétrabilité à 25°C de 79 et une température bille anneau de 46,9°C, provenant de la raffinerie de Lavéra et commercialisé par la Société BP;
- 4% en poids de 1,3-butadiène-styrène block polymère sous forme de granulés, commercialisé par la Société ICO POLYMERS sous la marque SBS ICO 101B ; et
- 0,6% en poids de la composition pulvérulente de vulcanisation de l'exemple 1 ;

Le bitume a été chauffé dans une étuve selon la norme NF EN 12594. Le polymère a ensuite été ajouté et la composition obtenue a été chauffée à 180°C et mélangée à l'aide d'un Ultra Turax (rotor stator) pendant 3 min. Enfin la composition pulvérulente de vulcanisation a été ajoutée et la composition a été chauffée à 180°C et mélangée à l'aide d'un Ultra Turax (rotor stator) pendant 30 s. Le mélange obtenu a enfin été mélangé pendant 1h30 à 180°C à l'aide d'un mélangeur classique (type Raynerie).

Le bitume modifié A1 obtenu et ses caractéristiques ont été évalués. Les résultats sont présentés dans le tableau 2 ci-dessous.

De la même manière, un bitume modifié B1 a été réalisé en remplaçant la composition pulvérulente de vulcanisation de l'exemple 1 par les granulés de l'essai 5 de l'exemple 1. Les proportions respectives de bitume, de polymère et de granulé selon l'invention ont été adaptées de façon à ce que la quantité de composition de vulcanisation ajoutée pour la fabrication du bitume modifié B1 corresponde à celle ajoutée pour la fabrication du bitume modifié A1.

Le bitume modifié B1 obtenu et ses caractéristiques ont également été évalués. Les résultats sont présentés dans le tableau 2 ci-dessous.

**Tableau 2**

| | Consigne | Bitumes modifiés | |
|---|---|---|---|
| | | A1 (comparatif) | B1 |
| Température bille anneau (°C) | ≥ 65 | 67.4 | 67.6 |
| Pénétrabilité à 25°C (10⁻¹mm) | 40-70 | 59 | 60 |
| Viscosité à 160°C (Pa.s) | | 3.38 | 3.39 |
| Retour élastique (%) | ≥ 85 | 86 | 85 |
| Point de fragilisation de Fraass (°C) | ≈ -15 | -17 | -17 |
| Décantation (%) | ≥ 90 | 99 | 98 |

### Exemple 4 : Evaluation d'un bitume modifié 50/70 selon l'invention

Un bitume modifié A2 a été réalisé de la même façon que dans l'exemple 3 à partir de :
- 97,125% en poids d'un bitume de grade 50/70 présentant une pénétrabilité à 25°C de 63 et une température bille anneau de 49,2°C, commercialisé par la Société IES;
- 2,5% en poids de 1,3-butadiène-styrène block polymère sous forme de granulés, commercialisé par la Société ICO POLYMERS sous la marque SBS ICO 101B ; et
- 0,375% en poids de la composition pulvérulente de vulcanisation de l'exemple 1 ;

De la même manière, un bitume modifié B2 a été réalisé en remplaçant la composition pulvérulente de vulcanisation de l'exemple 1 par les granulés de l'essai 5 de l'exemple 1. Les proportions respectives de bitume, de polymère et de granulé selon l'invention ont été adaptées de façon à ce que la quantité de composition de vulcanisation ajoutée pour la fabrication du bitume modifié B2 corresponde à celle ajoutée pour la fabrication du bitume modifié A2.

Les caractéristiques des bitumes modifiés A2 (comparatif) et B2 (selon l'invention) obtenus sont présentés dans le tableau 3 ci-dessous.

**Tableau 3**

| | Consigne | Bitumes modifiés | |
|---|---|---|---|
| | | A2 (comparatif) | B2 |
| Température bille anneau (°C) | ≥ 50 | 58,2 | 59 |
| Pénétrabilité à 25°C (10⁻¹mm) | 40-60 | 46 | 50 |
| Viscosité à 160°C (Pa.s) | ≈ 3,5 | 3,36 | 3,4 |
| Retour élastique (%) | ≥ 60 | 68 | 68 |
| Point de fragilisation de Fraass (°C) | ≈-10 | -13 | -12 |
| Décantation (%) | ≥ 90 | 100 | 98 |

### Exemple 5 : Evaluation d'un bitume modifié 35/50 selon l'invention

Un bitume modifié A3 a été réalisé de la même façon que dans l'exemple 3 à partir de :
- 97,125% en poids d'un bitume de grade 35/50 présentant une pénétrabilité à 25°C de 38 et une température bille anneau de 53,2°C, provenant de la raffinerie de Lavéra et commercialisé par la Société BP;
- 2,5% en poids de 1,3-butadiène-styrène block polymère sous forme de granulés, commercialisé par la Société ICO POLYMERS sous la marque SBS ICO 101B ; et
- 0,375% en poids de la composition pulvérulente de vulcanisation de l'exemple 1 ;

De la même manière, un bitume modifié B3 a été réalisé en remplaçant la composition pulvérulente de vulcanisation de l'exemple 1 par les granulés de l'essai 5 de l'exemple 1. Les proportions respectives de bitume, de polymère et de granulé selon l'invention ont été adaptées de façon à ce que la quantité de composition de vulcanisation ajoutée pour la fabrication du bitume modifié B3 corresponde à celle ajoutée pour la fabrication du bitume modifié A3.

Les caractéristiques des bitumes modifiés A3 (comparatif) et B3 (selon l'invention) obtenus sont présentés dans le tableau 4 ci-dessous.

**Tableau 4**

| | Consigne | Bitumes modifiés | |
|---|---|---|---|
| | | A3 (comparatif) | B3 |
| Température bille anneau (°C) | ≥ 54 | 61.2 | 62 |
| Pénétrabilité à 25°C (10⁻¹mm) | 30-45 | 37 | 39 |
| Viscosité à 160°C (Pa.s) | | 2.44 | 2.53 |
| Retour élastique (%) | ≥ 60 | 72 | 74 |
| Point de fragilisation de Fraass (°C) | ≈-10 | -11 | -13 |
| Décantation (%) | ≥ 90 | 98 | 98 |

Pour chacun des bitumes modifiés ci-dessus, une observation au microscope a révélé un fond jaune uni légèrement granuleux. Les bitumes modifiés selon l'art antérieur et selon l'invention présentent donc une microstructure identique.

On remarque que tous les résultats pour chacun des bitumes modifiés selon l'invention (B1, B2 et B3) valident les spécifications requises, et présentent des caractéristiques équivalentes à celles des bitumes modifiés correspondants selon l'art antérieur (A1, A2 et A3).

Ces évaluations valident donc l'intérêt des granulés selon l'invention.

## Revendications

1. Granulé comprenant :
- entre 0,5 et 30%, de préférence entre 0,5 et 20%, plus préférentiellement entre 2 et 5% en poids de bitume ; et
- entre 70% et 99,5%, de préférence entre 80 et 99,5%, plus préférentiellement entre 95 et 98% en poids d'une composition de vulcanisation comprenant un agent de vulcanisation ;
ledit granulé ne comprenant pas de cendres volantes, de silices, de matériaux à base de silices ou de mélanges de ceux-ci.

2. Granulé selon la revendication 1, **caractérisé en ce que** l'agent de vulcanisation est du soufre sublimé ou un donneur de soufre associé à un sulfénamide, ledit donneur de soufre étant choisi parmi les thiurames et les dithiomorpholines.

3. Granulé selon la revendication 1 ou 2, **caractérisé en ce que** la composition de vulcanisation comprend en outre un activateur de vulcanisation, un accélérateur de vulcanisation, un antioxydant, un agent émulsifiant ou les mélanges de ceux-ci.

4. Granulé selon l'une quelconque des revendications 1 à 3, **caractérisé en ce que** la composition de vulcanisation est pulvérulente.

5. Granulé selon l'une quelconque des revendications 1 à 4, **caractérisé en ce qu'**il est exempt de composés polymères.

6. Granulé selon l'une quelconques des revendications 1 à 5, **caractérisé en ce que** le bitume est choisi parmi les bitumes ayant une pénétrabilité à 25°C, mesurée selon la norme NF EN 1423, comprise entre 50 et 220 et une température bille anneau, mesurée selon la norme NF EN 1427, comprise entre 35 et 60°C.

7. Procédé de fabrication de granulés tels que définis dans l'une des revendications 1 à 6 comprenant le mélange par co-extrusion d'entre 0,5 et 30%, de préférence ente 0,5 et 20%, plus préférentiellement entre 2 et 5% en poids de bitume avec entre 70 et 99,5%, de préférence entre 80% et 99,5%, plus préférentiellement entre 95 et 98% en poids d'une composition de vulcanisation comprenant un agent de vulcanisation.

8. Procédé selon la revendication 7, **caractérisé en ce que** le profil de température de co-extrusion ne dépasse pas 100°C.

9. Utilisation de granulés tels que définis dans l'une des revendications 1 à 6 ou tels que préparés selon le procédé de la revendication 7 ou 8, dans un procédé de fabrication d'un bitume modifié.

## Patentansprüche

1. Granulat, umfassend:
- zwischen 0,5 und 30 Gewichtsprozent, bevorzugt zwischen 0,5 und 20 Gewichtsprozent, stärker bevorzugt zwischen 2 und 5 Gewichtsprozent Bitumen; und
- zwischen 70 und 99,5 Gewichtsprozent, bevorzugt zwischen 80 und 99,5 Gewichtsprozent, stärker bevorzugt zwischen 95 und 98 Gewichtsprozent einer Vulkanisierungszusammensetzung, welche ein Vulkanisierungsmittel umfasst; wobei das Granulat keine Flugasche, keine Kieselsäure, keine Materialien auf Kieselsäure-Basis oder Mischungen daraus umfasst.

2. Granulat nach Anspruch 1, **dadurch gekennzeichnet, dass** das Vulkanisierungsmittel sublimierter Schwefel oder ein Schwefeldonor in Verbindung mit einem Sulfenamid ist, wobei der Schwefeldonor gewählt ist aus Thiuramen und Dithiomorpholinen.

3. Granulat nach Anspruch 1 oder 2, **dadurch gekennzeichnet, dass** die Vulkanisierungszusammensetzung ferner einen Vulkanisierungsaktivator, einen Vulkanisierungsbeschleuniger, ein Antioxidans, einen Emulgator oder Mischungen daraus umfasst.

4. Granulat nach einem der Ansprüche 1 bis 3, **dadurch gekennzeichnet, dass** die Vulkanisierungszusammensetzung pulverförmig ist.

5. Granulat nach einem der Ansprüche 1 bis 4, **dadurch gekennzeichnet, dass** es frei von Polymerzusammensetzungen ist.

6. Granulat nach einem der Ansprüche 1 bis 5, **dadurch gekennzeichnet, dass** das Bitumen gewählt ist aus Bitumen, das bei 25 °C gemessen nach der Norm NF EN 1423 eine Durchlässigkeit zwischen 50 und 220 aufweist sowie eine nach der Norm NF EN 1427 gemessene Ring-Kugel-Temperatur zwischen 35 und 60 °C aufweist.

7. Verfahren zur Herstellung von Granulat gemäß der Beschreibung in einem der Ansprüche 1 bis 6, umfassend das Mischen durch Coextrusion von zwischen 0,5 und 30 Gewichtsprozent, bevorzugt zwischen 0,5 und 20 Gewichtsprozent, stärker bevorzugt zwischen 2 und 5 Gewichtsprozent Bitumen mit zwischen 70 und 99,5 Gewichtsprozent, bevorzugt zwischen 80 und 99,5 Gewichtsprozent, stärker bevorzugt zwischen 95 und 98 Gewichtsprozent einer Vulkanisierungszusammensetzung, welche ein Vulkanisierungsmittel umfasst.

8. Verfahren nach Anspruch 7, **dadurch gekennzeichnet, dass** das Temperaturprofil der Coextrusion 100 °C nicht überschreitet.

9. Verwendung von Granulat nach einem der Ansprüche 1 bis 6 oder wie in dem Verfahren in Anspruch 7 oder 8 hergestellt in einem Verfahren zur Herstellung eines modifizierten Bitumens.

## Claims

1. Granule comprising:
- between 0.5% and 30%, preferably between 0.5% and 20%, more preferably between 2% and 5% by weight of bitumen; and
- between 70% and 99.5%, preferably between 80% and 99.5%, more preferably between 95% and 98% by weight of a vulcanizing composition comprising a vulcanizing agent;
said granules containing no flyash, silicas, silica-based materials or mixtures thereof.

2. The granule as claimed in claim 1, **characterized in that** the vulcanizing agent is sublimed sulfur or a sulfur donor in combination with a sulfenamide, said sulfur donor being selected from thiurams and dithiomorpholines.

3. The granule as claimed in claim 1 or 2, **characterized in that** the vulcanizing composition further comprises a vulcanization activator, a vulcanization accelerator, an antioxidant, an emulsifier or mixtures thereof.

4. The granule as claimed in any of claims 1 to 3, **characterized in that** the vulcanizing composition is pulverulent.

5. The granule as claimed in any of claims 1 to 4, **characterized in that** it is free of polymeric compounds.

6. The granule as claimed in any of claims 1 to 5, **characterized in that** the bitumen is selected from bitumens having a penetrability at 25°C, measured in accordance with standard NF EN 1423, of between 50 and 220 and a ring & ball temperature, measured in accordance with standard NF EN 1427, of between 35 and 60°C.

7. A method for producing granules as defined in any of claims 1 to 6, which comprises mixing by coextrusion between 0.5% and 30%, preferably between 0.5% and 20%, more preferably between 2% and 5% by weight of bitumen with between 70% and 99.5%, preferably between 80% and 99.5%, more preferably between 95% and 98% by weight of a vulcanizing composition comprising a vulcanizing agent.

8. The method as claimed in claim 7, **characterized in that** the coextrusion temperature profile does not exceed 100°C.

9. The use of granules as defined in any of claims 1 to 6 or as produced by the method of claim 7 or 8 in a method for producing a modified bitumen.
